Europäisches Patentamt

European Patent Office

Office européen des brevets

(19)

(11) Numéro de publication: **0 187 156 B1**

(12) **FASCICULE DE BREVET EUROPEEN**

(45) Date de publication de fascicule du brevet:
**08.01.92**

(21) Numéro de dépôt: **85903009.0**

(22) Date de dépôt: **24.06.85**

(86) Numéro de dépôt internationale :
**PCT/FR85/00166**

(87) Numéro de publication internationale :
**WO 86/00448 (16.01.86 86/02)**

(51) Int. Cl.⁵: **G06K 19/08**, G06K 1/14,
B42D 15/02

(54) **PROCEDE DE TRANSFERT D'INFORMATIONS DU RECTO AU VERSO D'UN DOCUMENT ET DISPOSITIF DE MISE EN OEUVRE DU PROCEDE.**

(30) Priorité: **22.06.84 FR 8409834**

(43) Date de publication de la demande:
**16.07.86 Bulletin 86/29**

(45) Mention de la délivrance du brevet:
**08.01.92 Bulletin 92/02**

(84) Etats contractants désignés:
**AT BE CH DE FR GB IT LI LU NL SE**

(56) Documents cités:
**EP-A- 0 027 886**
**FR-A- 2 305 806**
**LU-A- 81 049**
**US-A- 4 027 142**

(73) Titulaire: **CIMSA SINTRA**
**26, rue Malakoff**
**F-92600 Asnieres(FR)**

(72) Inventeur: **Bartoli, Bernard Marc**
**Lieudit "Le Buat"**
**F-78490 Bazoches s/Guyonne(FR)**

(74) Mandataire: **Viard, Jean**
**Cabinet VIARD 28 bis, avenue Mozart**
**F-75016 Paris(FR)**

Rank Xerox (UK) Business Services

**Description**

La présente invention a pour objet un procédé de transfert d'informations, du recto au verso d'un document,destiné en particulier, mais non exclusivement, à des documents de sécurité tels que cartes d'identité, cartes de crédit, d'identification ou d'accès,etc... ainsi qu'un dispositif de mise en oeuvre du procédé. Ce problème se pose fréquemment pour ce type de documents où au moins certaines informations telles que, par exemple le nom du porteur et la date de fin de validité doivent figurer de part et d'autre du document.

On sait que la fabrication de cartes d'identité modernes s'effectue actuellement de la façon suivante: à partir de la Demande d'établissement du document, qui sera appelé par la suite "Document de Base", généralement cartonné, comportant une photo et un certain nombre d'informations telles que la date de naissance, l'adresse, la profession, la date d'établissement et la date d'expiration, la signature du Demandeur, des informations sur la famille, un numéro d'ordre, le lieu d'établissement et la signature de l'autorité responsable etc....., les informations "verbales" étant avantageusement composées et imprimées sur le formulaire de demande par une machine informatique, on photographie la zone comportant les informations (y compris la photo) devant apparaître sur le recto de la carte d'identité. Cette zone d'informations "recto" sera désignée par la suite par "zone utile".

A partir du négatif ainsi obtenu on transfère ces informations sur un support positif de sécurité c'est-à-dire présentant, par exemple une préimpression s'opposant à une photographie, un tramage particulier, une composition chimique particulière,un filigrane etc. La fabrication du document définitif est ainsi effectuée par un procédé purement physicochimique sans aucun risque d'erreur, les documents tant négatif que positif étant incorporés à des bandes entraînées par des picots au cours de leur établissement. Une machine utilisant ce procédé est décrite dans FR-A-2 528 992.

Le procédé ne permet pas d'effectuer le report d'informations portées par le recto sur le verso du document. Pour effectuer ce report, il est nécessaire de prévoir une véritable gestion, incluant le stockage des informations à imprimer, le retournement des documents et la reproduction des informations à l'aide d'une imprimante qui devra restituer ces informations au bout d'un certain temps. Il en résulte des difficultés de fabrication, difficultés qui sont accrues lors de l'initialisation ou de l'arrêt des opérations d'impression et lorsque surviennent des coupures ou incidents divers sur la chaîne de fabrication des documents. Le retournement des documents introduit une discontinuité dans le processus continu de fabrication, qui est inacceptable en raison du grand nombre de documents à fabriquer.

D'autre part, les informations à transférer du recto au verso ne peuvent l'être qu'après développement et tirage du document. En effet, celles-ci passent à travers des bains divers et il est impossible de prévoir le comportement d'une plage préimprimée dans ces bains. De plus, il n'est pas possible de prévoir un développement et un tirage double face qui soit suffisamment simple pour conduire à un procédé industriel.

US-A-4 027 142 décrit un dispositif de traitement automatique de chèques ou autres documents financiers incluant un étage de lecture de caractères, un numéro d'identification étant imprimé simultanément au recto et au verso du document à partir d'informations portées au recto.

EP-A-0 027 886 concerne également un dispositif pour reproduire des caractères détectés par un lecteur de caractères, les caractères lus étant ensuite imprimés sur une étiquette.

Dans ces deux documents, la première opération consiste à lire des caractères codés ou non puis à les reconnaître et à les traiter avant de les imprimer à nouveau.

La présente invention a pour but de remédier à cet inconvénient et de proposer un procédé et un dispositif dans lequel l'impression des informations est effectuée après la lecture d'une partie du recto et en synchronisme avec celle-ci, évitant tout risque d'erreur dû à la gestion des informations, ce qui est plus particulièrement intéressant dans le cas de documents de sécurité.

La présente invention vise le transfert ou report de caractères ou signes, recomposés à l'identique du recto au verso.

Selon la présente invention, le procédé continu de fabrication des documents avec transfert d'informations portées au recto de chaque document sur le verso de celui-ci, par lecture d'au moins une partie des informations du recto et impression des informations lues sur le verso, est caractérisé en ce que le transfert des informations consiste à etablir, au moyen d'une disposition réciproque d'un circuit d'asservissement commandant une imprimante dont la tête d'impression est disposée en regard du verso et d'un dispositif de lecture disposé en regard du recto, une correspondance entre au moins un point de lecture et un point d'écriture.

Ainsi, les informations prélevées sur le recto de la feuille sont imprimées directement sur le verso de celle-ci. En raison du défilement du document devant le dispositif de lecture, celui-ci étant avantageusement à structure linéaire. Bien entendu, l'imprimante présente une structure linéaire correspondante c'est-à-dire qu'elle peut être constituée par une imprimante à aiguilles ou à jets d'encre dont les éléments d'impression sont disposés en une colonne, les aiguilles étant disposées perpendiculairement au sens de défilement des documents, parallèlement à la cible de lecture constituée avantageusement par une barette de photodiodes Le nombre d'aiguilles d'impression est limité et, par exemple, la tête d'impression comporte neuf aiguilles par ligne d'impression. La définition de la caméra est, en général, bien supérieure à neuf points pour la hauteur d'une ligne de sorte que l'on associe n points de la cible de la caméra à un point d'écriture, un étage logique calculant la valeur moyenne des n points correspondant à un point d'écriture.

Dans un premier de mode de réalisation, on duplique sur le document de base (demande de Carte d'Identité par exemple) une zone auxiliaire, le long de l'un des bords de la zone utile, les informations qui seront à reproduire au verso de la carte et l'on photographie l'ensemble zone utile + zone auxiliaire. L'ensemble est reporté du négatif obtenu par photographie au support positif. La zone auxiliaire est lue par la caméra ligne et les informations ainsi détectées sont reportées au verso du document définitif par l'imprimante verso.

Ce premier mode de réalisation conduit toutefois à une perte de papier tant sur le négatif que sur le positif et nécessite un massicotage ou échenillage supplémentaire pour séparer la zone utile de la zone auxiliaire.

Dans un second mode de réalisation, on procède comme actuellement c'est-à-dire qu'aucune zone auxiliaire n'est prévue. Dans ce mode de réalisation, les informations verso sont prélevées directement sur le recto du document de base par lecture. Ces informations verso sont mémorisées et restituées sur une imprimante verso sur le document définitif correspondant lorsque celui-ci a parcouru un trajet dont la longueur est de N cartes + N espaces intercartes. Dans cette solution, il est nécessaire de prévoir une mémoire, mais les informations, conformément à l'invention, ne sont pas traitées et sont simplement mémorisées pendant un certain temps. Dans ce mode de réalisation, la caméra de lecture est disposée au dessus du recto du document de base alors que l'imprimante verso est disposée plus loin dans la machine de fabrication.

Dans un troisième mode de réalisation, les informations à reporter sont prélevées directement sur le document définitif, après lecture du document de base, tirage du négatif puis tirage du positif, l'imprimante étant dans ce cas, comme dans le premier mode de réalisation disposée directement au-dessous de la caméra de lecture. Bien entendu, la caméra ne lit qu'une zone déterminée de la carte ne contenant que des informations composées de signes alphanumériques pouvant être lus.

D'autres caractéristiques et avantages de l'invention apparaîtront au cours de la description qui va suivre d'un mode de réalisation particulier, donné uniquement à titre d'exemple non limitatif, en regard des dessins qui représentent :

- La Fig.1, une vue schématique d'un dispositif selon l'invention;
- La Fig.2, une vue du dispositif de lecture;
- La Fig.3, le circuit d'asservissement de l'imprimante;
- La Fig.4, une imprimante verso pour la mise en oeuvre de l'invention.

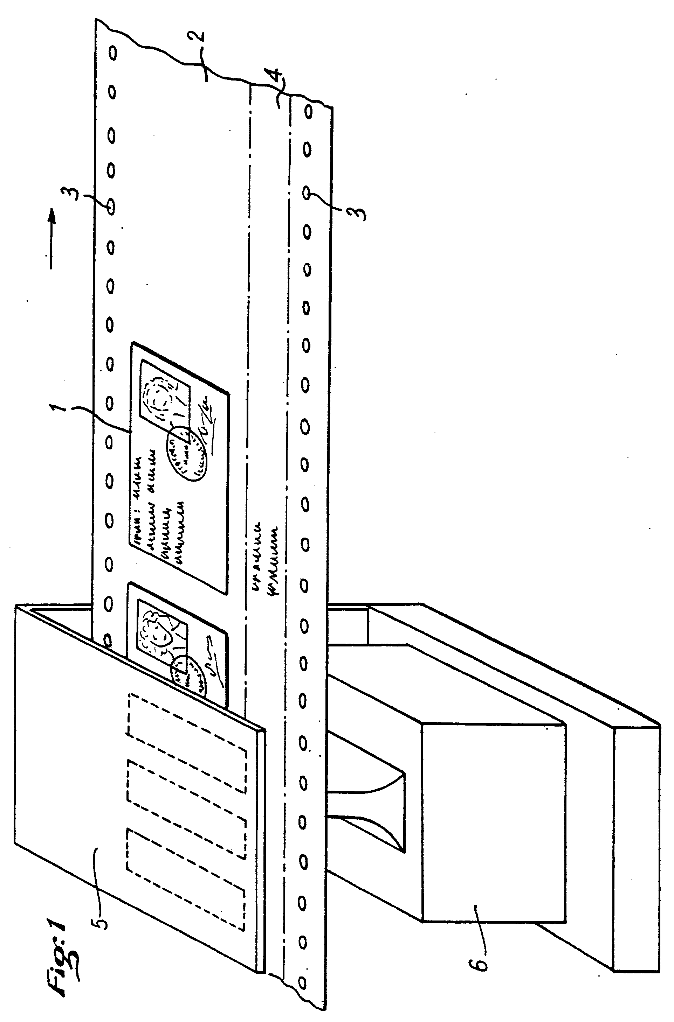

Sur la Fig.1, on distingue les principaux éléments du dispositif selon l'invention.Les documents 1 en cours de fabrication forment une bande 2, entraînée comme en soi connu par des roues à picots (non représentées) coopérant avec des perforations 3 latérales à la bande 2 (entraînement dit CAROL).

Les informations à retranscrire au verso sont, par exemple, le nom du porteur de document, la date de validité de celui-ci et/ou un numéro d'ordre. Elles sont, dans le premier mode de réalisation, portées dans la zone auxiliaire du document de base et apparaissent après photographie et développement dans la zone 4 en même temps que le recto qui est la face supérieure de la bande 2 sur la Fig.1. La bande 2 circule entre un étage de lecture 5 et une imprimante 6, l'imprimante 6 étant disposée immédiatement au-dessous du dispositif de lecture 5 et, par rapport à la bande, du côté opposé à celui-ci.

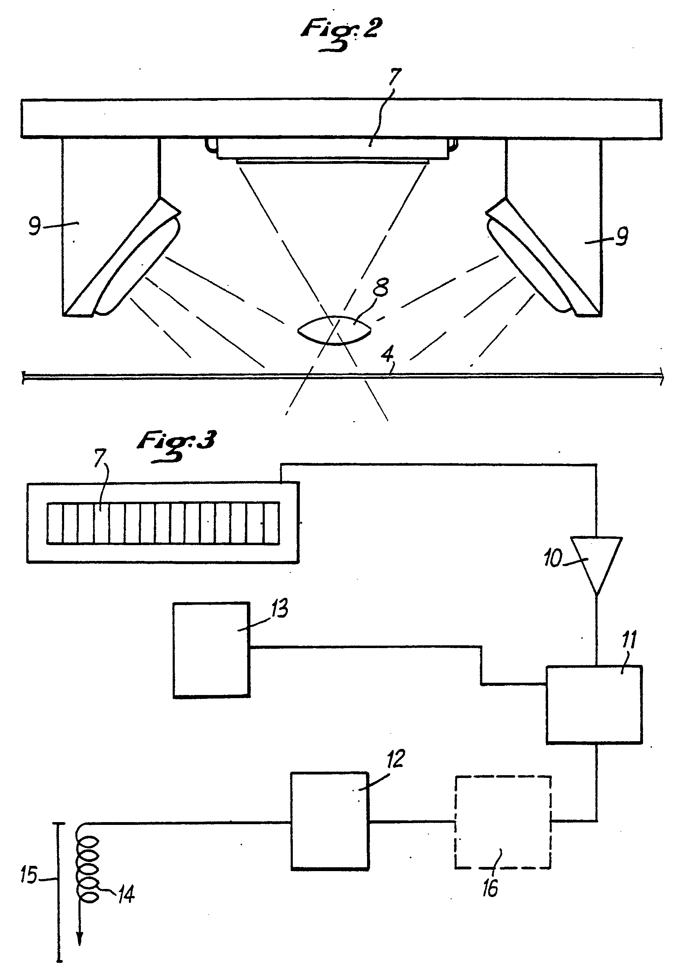

L'étage de lecture 5 est représenté schématiquement sur la Fig.2. Il se compose d'une caméra 7 ligne du commerce dont la cible est, par exemple, constituée par une barrette de 128 photodiodes. Bien entendu, le nombre de photodiodes est fonction de la hauteur de la zone à "balayer" et donc du nombre de lignes à reporter.

Sur la Fig.2, le sens de défilement est, arbitrairement, de la droite vers la gauche de la Fig. L'image de la bande 4 est projetée sur la cible 7 par une optique 8 symbolisée par une lentille. La caméra est conçue pour analyser les caractères à reproduire colonne par colonne à la vitesse de défilement de la bande 2,4. En fonction du type de diodes constituant la barrette, il est souhaitable d'éclairer la plage à détecter par exemple au moyen de deux blocs d'éclairage 9 disposés de part et d'autre de l'optique 8. La distance focale de l'optique 8 est choisie en fonction du rapport physique entre la hauteur de la barrette 7 et la dimension en hauteur des caractères à reproduire, ou de la hauteur de l'ensemble des lignes à reproduire ainsi que de leurs distances réciproques lorsque l'on désire transférer plusieurs lignes superposées.

La Fig.3 est le schéma électronique du circuit d'asservissement de l'imprimante par les informations prélevées par la caméra. La cible 7 est connectée à un amplificateur à seuil 10 permettant une détection convenable des informations à reproduire à savoir le noir et le blanc, le noir pouvant correspondre à une valeur "1" et le blanc à la valeur "0". Le résultat est stocké dans un registre 11 qui sert de mémoire de lecture et dans lequel on vient puiser les informations selon un cadencement donné par une horloge 13. Dans le cas le plus général où le nombre de points de lecture est supérieur au nombre de points d'écriture, l'étage 11 inclût une carte dérterminant la valeur moyenne de n points de lecture pour donner un point d'écriture. L'horloge 13 est reliée d'une part au registre 11 et, d'autre part à la commande de défilement du papier par une liaison non représentée. Ainsi, l'horloge impose au papier 2 une vitesse de défilement régulière et, d'autre part permet de tenir compte de l'inertie des têtes d'impression. Le signal de sortie du registre 11 est amplifié par un amplificateur 12, en courant, du type "Darlington", par exemple et appliqué sur les électroaimants 14 d'une imprimante à aiguilles 15. Bien entendu, à chaque groupe de points de la cible correspond un circuit tel que celui qui vient d'être décrit la correspondance se faisant point par point par une liaison biunivoque, l'horloge 13 étant, bien entendu commune à tous les circuits.

Dans ce premier mode de réalisation, comme dans le troisième, l'imprimante 6 est disposée directement au-dessous du dispositif de lecture 5. La description du premier mode de réalisation est également valable en ce qui concerne le troisième mode à ceci près que, sur la Fig.1, il n'existe pas de zone auxiliaire 4, le dispositif de lecture étant disposé au-dessus du document définitif et non au-dessus de la zone auxiliaire 4. Dans le second mode de réalisation, ( non représenté ), le dispositif 5 de lecture est disposé au dessus du document de base et donc en amont de la machine de fabrication des documents définitifs alors que l'imprimante est disposée en-dessous de la bande 2, à l'intérieur de la machine. Dans ce cas, un étage mémoire 16 (Fig.3) retarde la transmission à l'imprimante 6 pendant un temps déterminé de manière à ce que le document définitif arrive effectivement au-dessus de l'imprimante verso.

L'objet principal de la présente invention est de reproduire à l'échelle certaines de informations portées sur le recto d'un document. Il est toutefois possible, par voie purement optique d'agrandir ou de réduire les caractères ou signes qui sont à porter sur le verso du document. Cette opération peut également être effectuée électroniquement dans l'étage 16 figuré en tirets sur la Fig.3. L'étage 16 peut également être un étage de codage pouvant, par exemple coder les caractères lus sur le recto en caractères à lecture magnétique connus sous le nom de CMC7 ou en caractères à lecture optique O.C.R., mais l'ordre relatif des caractères n'est en aucun cas modifié. Il ne s'agit dans ce dernier cas que d'une transcription d'écriture et la qualité de l'information n'est en aucun cas modifiée.

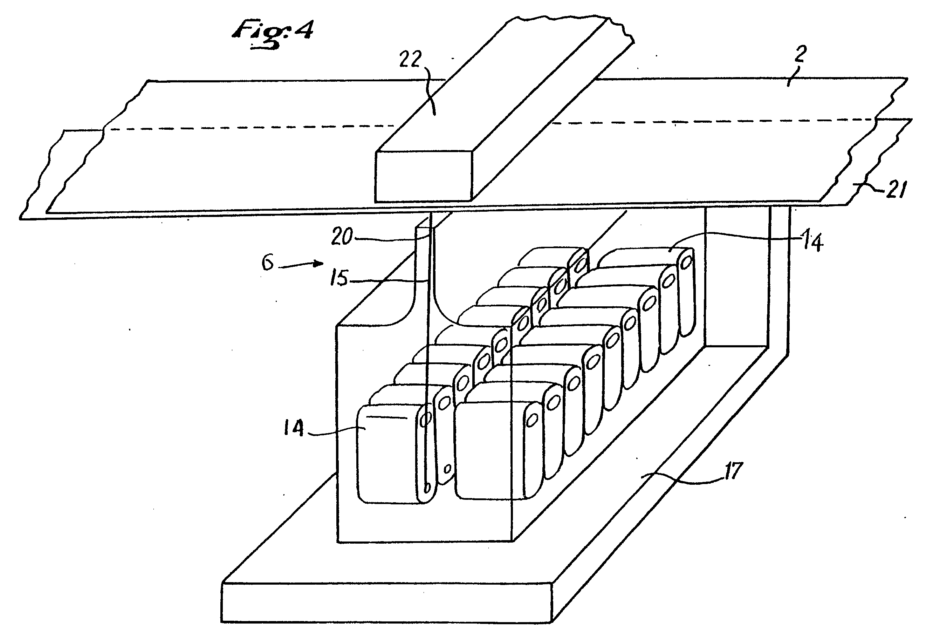

La Fig.4 représente une tête d'impression 16 à aiguilles 15. De telles têtes sont connues. Cependant elles sont conçues pour écrire ligne par ligne, chaque tête pouvant imprimer 7 points superposés. L'inconvénient des têtes connues provient de ce qu'il est pratiquement impossible de reproduire plus d'une ligne sur un document de dimensions restreintes.

Selon une caractéristique de la présente invention, le dispositif de transfert inclût une imprimante spéciale, dite imprimante verso, faisant appel à la technique d'impression par impact d'aiguilles sur un ruban encreur. Comme celà apparaît sur la Fig.4, sur un support 17 sont disposé un ensemble d'électroaimants 14, chacun étant connecté à un registre 11 (Fig.3) de manière à établir une relation directe entre un groupe de points de lecture et un point d'écriture . A chaque électroaimant 14 correspond une aiguille 15 coulissant dans un palier 20 de préférence à rubis, pour venir frapper un ruban encreur 21 sur une enclume 22, la bande 2 dont fait partie le document 1 passant entre le ruban encreur 21 et l'enclume 22. Les électroaimants 14 sont disposés tête-bêche de part et d'autre du plan de frappe des aiguilles 15. Bien entendu, les têtes restent dans une position fixe, relativement aux autres têtes et relativement au bâti de la machine. Des éléments de rappel (ressorts) n'ont pas été représentés sur la Fig. Il est ainsi possible de constituer une imprimante multilignes pouvant, par exemple frapper quatre lignes, d'encombrement compatible avec le résultat recherché. Une telle imprimante peut, reproduire simultanément une à quatre lignes de caractères.

Le choix de l'impression par aiguille ne constitue pas une limitation de la présente invention qui peut faire appel à des imprimantes à projection d'encre ou fonctionnant selon tout autre procédé.

## Revendications

1. Procédé continu de fabrication des documents avec transfert d'informations portées au recto de chaque document sur le verso de celui-ci, par lecture d'au moins une partie des informations du recto et impression des informations lues sur le verso,
   caractérisé en ce
   que le transfert des informations consiste à etablir, au moyen d'une disposition réciproque d'un circuit d'asservissement commandant une imprimante dont la tête d'impression est disposée en regard du verso et d'un dispositif de lecture disposé en regard du recto, une correspondance entre au moins un point de lecture et un point d'écriture.

2. Procédé selon la revendication 1, caractérisé en ce que le document (1) faisant partie intégrante d'une bande (2) entraînée à vitesse constante, il consiste à détecter la valeur moyenne des points d'au moins une partie d'une ligne perpendiculaire à la direction de défilement, par un détecteur (5) de prise de vue linéaire perpendiculaire à la direction de défilement de la ligne, disposé en face du recto du document, et à commander à partir de l'information détectée, une imprimante linéaire (6) par points disposés au regard du verso du document (2) parallèlement au détecteur (5).

3. Dispositif d'impression d'informations figurant au recto d'un document sur le verso de celui-ci pour la mise en oeuvre du procédé selon la revendication 1, le document étant entraîné en défilement, le dispositif comprenant un détecteur de prise de vue (5) du côté recto, et une imprimante (6) du côté verso, un circuit d'asservissement reliant le détecteur et l'imprimante, caractérisé en ce que :
   - le document (1) forme partie intégrante de la bande (2),
   - la cible (7) du détecteur est constitué par une barrette de photodiodes perpendiculaire à la direction du défilement,
   - la cible (7) se trouve au regard d'une zone à l'extérieur du document,
   - l'imprimante (6) comprend un circuit de commande des éléments d'impression (15) alignés dans une direction parallèle à celle de la barrette.

## Claims

1. A method of continuously manufacturing documents with information on the front of each document being transferred to the back thereof by reading at least a portion of the front information and by printing the information as read onto the back, the method being characterized in that the information is transferred by establishing correspondence between at least one read point and a write point by means of a reciprocal disposition of a servo control circuit controlling a printer whose print head is disposed facing the back and a reader disposed facing the front.

2. A method according to claim 1, characterized in that the document (1) forms an integral portion of a tape (2) driven at constant speed, and the method consists in detecting the mean values of points of at least a portion of a line perpendicular to the travel direction by means of a linear reader (5) extending perpendicularly to the line travel direction and facing the front of the document, and in using the information as read as a basis for controlling a linear dot printer (6) disposed parallel to the detector (5) and facing the back of the document (2).

3. Apparatus for printing information appearing on the front of a document onto the back of the document in order to implement the method of claim 1, the document being driven to travel lengthwise, the device comprising a reader (5) on the front side and a printer (6) on the back side with a servo control circuit connecting the reader to the printer, the device being characterized in that:
   the document (1) forms an integral portion of the tape (2);
   the sensitive area (7) of the reader is constituted by a strip of photodiodes perpendicular to the travel direction;
   the sensitive area (7) faces a zone on the outside of the document; and
   the printer (6) includes a circuit for controlling print elements (15) aligned in a direction parallel to the direction of the strip.

## Patentansprüche

1. Kontinuierliches Verfahren zum Herstellen von Dokumenten mit Übertragung von Informationen von der Vorderseite eines Dokumentes auf dessen Rückseite durch Lesen wenigstens eines Informationsteiles der Vorderseite und Drucken der gelesenen Informationen auf die Rückseite,
dadurch gekennzeichnet,
daß die Informationsübertragung mit Hilfe einer Umkehrvorrichtung eines Regelkreises, der einen Drucker mit einem gegenüber der Vorderseite angebrachten Druckkopf steuert, und einer der Rückseite gegenüberliegenden Leseeinheit erfolgt, indem eine Zuordnung zwischen wenigstens einem Lese- und einem Schreibpunkt hergestellt wird.

2. Verfahren nach Anspruch 1, dadurch gekennzeichnet, daß das Dokument (1) ein fester Bestandteil eines mit konstanter Geschwindigkeit gezogenen Bandes (2) ist, das zum Abtasten des Punktmittelwertes wenigstens eines Teiles einer zur Laufrichtung senkrechten Zeile ein Abtaster (5) existiert, der linear und senkrecht zur Zeilenlaufrichtung abtastet und gegenüber der Vorderseite des Dokumentes angebracht ist, und daß sobald eine Information abgetastet ist, ein Lineardrucker (6) durch Punkte gesteuert wird, die sich gegenüber der Rückseite des Dokumentes (2) parallel zum Abtaster (5) befinden.

3.  Vorrichtung zum Durchführen des Verfahrens nach Anspruch 1, bei dem das Dokument kontinuierlich eingezogen wird und die Vorrichtung einen Abtaster (5) auf der Vorderseite und einen Drucker (6) auf der Rückseite sowie einen Regelkreis hat, der den Abtaster und den Drucker miteinander verkettet, dadurch gekennzeichnet, daß
    - das Dokument (1) einen festen Bestandteil des Bandes (2) bildet,
    - die Abtastscheibe (7) durch eine Leiste aus senkrecht zur Laufrichtung des Bandes stehenden Fotodioden gebildet wird,
    - die Scheibe (7) sich gegenüber eines Außenbereichs des Dokuments befindet,
    - der Drucker (6) einen Steuerkreis für die Druckelemente (15) umfaßt, die so ausgerichtet sind, daß sie parallel zur Fotodiodenleiste verlaufen.

Fig.1

## Fig.2

## Fig.3

Fig.4

EP 0 187 156 B1